Europäisches Patentamt

(19) European Patent Office

Office européen des brevets

(11) **EP 0 805 371 B1**

(12) **FASCICULE DE BREVET EUROPEEN**

(45) Date de publication et mention
de la délivrance du brevet:
**26.10.2005 Bulletin 2005/43**

(51) Int Cl.[7]: **G02F 1/025**

(21) Numéro de dépôt: **97400654.6**

(22) Date de dépôt: **24.03.1997**

(54) **Modulateur électro-optique à puits quantiques**

Elektrooptischer Modulator mit Quantentöpfen

Quantum well electro-optic modulator

(84) Etats contractants désignés:
**DE ES GB IT NL SE**

(30) Priorité: **29.04.1996 FR 9605371**

(43) Date de publication de la demande:
**05.11.1997 Bulletin 1997/45**

(73) Titulaire: **Avanex Corporation**
**Fremont, CA 94538 (US)**

(72) Inventeurs:
• **Starck, Christophe**
**91700 Ste Genevieve Des Bois (FR)**
• **Lesterlin, Dominique**
**94400 Vitry Sur Seine (FR)**

(74) Mandataire: **Haines, Miles John L.S. et al**
**D Young & Co**
**120 Holborn**
**London EC1N 2DY (GB)**

(56) Documents cités:
• **ELECTRONICS AND COMMUNICATIONS IN JAPAN, PART 2 (ELECTRONICS), JUNE 1992, USA, vol. 75, no. 6, ISSN 8756-663X, pages 24-32, XP000316207 KOTAKA I ET AL: "High-speed InGaAs/InAlAs multiple-quantum-well optical modulator"**
• **JOURNAL OF LIGHTWAVE TECHNOLOGY, JUNE 1988, USA, vol. 6, no. 6, ISSN 0733-8724, pages 743-757, XP000050072 WOOD T H: "Multiple quantum well (MQW) waveguide modulators"**

## Description

L'invention se situe dans le domaine des composants optoélectroniques et concerne plus particulièrement les modulateurs électro-optiques semi-conducteurs.

Ces composants sont utilisés dans des systèmes de transmission par fibre optique. Ils font par exemple partie des émetteurs où ils servent à moduler la puissance ou la phase d'une onde porteuse optique. Pour moduler la puissance, on peut utiliser directement un modulateur de puissance associé à une source laser, par exemple sous la forme d'un laser à modulateur intégré. La puissance peut également être modulée par l'intermédiaire de modulateurs de phase placés dans une structure interférométrique, telle qu'une structure Mach-Zehnder.

Les modulateurs électro-optiques sont couramment fabriqués sur un substrat d'éléments III-V avec une structure dite "p-i-n", c'est-à-dire comportant successivement le substrat dopé pour avoir une conductibilité de type n, une couche active non dopée et une couche dopée pour avoir une conductibilité de type p. L'ensemble est polarisé en inverse par une tension électrique de commande modulée conformément aux données à émettre.

Afin de réduire l'amplitude de la tension de commande, on utilise généralement une couche active ayant une structure dite à "puits quantiques" formée d'un succession de puits et de barrières de potentiel.

Les modulateurs ayant cette structure peuvent être utilisés en tant que modulateurs de puissance ou comme modulateurs de phase. Dans le premier cas, la tension de commande vise essentiellement à moduler l'absorption de puissance optique dans la couche active. Dans le second cas, la tension module l'indice de réfraction de cette couche.

Pour améliorer les performances des systèmes de transmission optique, on cherche à réaliser des modulateurs capables de fonctionner à très haut débit, par exemple à 40 Gb/s. Il convient donc de concevoir des modulateurs capables de fonctionner à haute fréquence toute en assurant un taux de modulation de l'onde optique le plus élevé possible, de façon à autoriser une détection correcte au niveau des récepteurs. Il convient également que les modulateurs soient capables de moduler une onde porteuse de forte puissance optique, par exemple de l'ordre de 10 mW.

Or, avec la structure p-i-n évoquée ci-dessus, on est confronté à deux types de limitation. La première est due à un phénomène de saturation qui a pour effet de diminuer le taux d'extinction des modulateurs de puissance lorsque la puissance optique d'entrée à moduler augmente. Un phénomène de saturation analogue s'observe également avec les modulateurs de phase sous la forme d'une diminution du taux de modulation de l'indice. Dans les structures à puits quantiques, cette saturation provient d'une accumulation de trous dans les puits qui induit une diminution du champ électrique dans ces puits. Il en résulte une réduction très forte de la bande passante du modulateur lorsque la puissance optique augmente du fait d'un accroissement du temps de piégeage dans les trous.

Une seconde limitation de la bande passante, intervenant même à très faible puissance optique provient des capacités parasites de la structure utilisée. Elles sont dues en partie à la capacité de la jonction p-i-n située entre les deux électrodes du composant.

Pour améliorer la puissance de saturation, on a proposé de réaliser des modulateurs utilisant des puits quantiques multiples possédant des barrières contraintes en tension. Cette solution permet d'augmenter la puissance de saturation en réduisant le temps de piégeage des trous dans les puits.

Une autre solution peut consister à réaliser des modulateurs de longueur très courte, par exemple inférieure à 100 µm, mais le gain en bande passante se fait au détriment du taux de modulation.

Pour limiter la capacité parasite due à la jonction p-i-n, on peut envisager d'augmenter l'épaisseur de la couche active en augmentant le nombre de puits qui la constituent. Cette solution permet bien de réduire la capacité mais elle entraîne une augmentation des pertes d'absorption du modulateur dans son état transparent. Cet inconvénient apparaît également dans le cas de la structure à puits quantiques multiples possédant des barrières contraintes en tension mentionnée précédemment.

L'invention a pour but de remédier au mieux aux deux problèmes précédents.

Dans ce but, l'invention a pour objet un modulateur électro-optique comportant deux électrodes disposées de part et d'autre d'une structure semi-conductrice, ladite structure étant réalisée sur un substrat d'éléments III-V et comportant :

- une première couche composée desdits éléments III-V et dopée pour présenter une conductibilité de type n,
- une seconde couche composée desdits éléments III-V et dopée pour présenter une conductibilité de type p,
- une couche active disposée entre lesdites première et seconde couches et composée d'une succession de puits quantiques et de barrières de potentiels, caractérisé en ce que pour diminuer la capacité électrique présente entre lesdites électrodes, une troisième couche composée d'éléments III-V non dopés est disposée entre ladite couche active et ladite première couche.

Comme nous allons l'expliquer en détail dans la suite de la description, la position de la troisième couche dans la structure semi-conductrice est déterminante quant au phénomène de saturation à forte puissance optique.

Afin d'entraîner des pertes optiques minimum, on prévoira que la troisième couche a une composition qui lui assure la transparence pour les longueurs d'onde des ondes destinées à être modulées par le modulateur.

Selon un mode de réalisation particulier, la troisième couche est composée des mêmes éléments que le substrat. Cette solution permet en effet une simplification du procédé de fabrication.

Selon un cas particulier de réalisation, la troisième couche est en contact direct avec la couche active et la première couche.

D'autres aspects et avantages de l'invention apparaîtront dans la suite de la description en référence aux figures.

- La figure 1 représente un modulateur électro-optique selon l'état de la technique.
- La figure 2 représente une structure semi-conductrice modifiée pour diminuer la capacité.
- La figure 3 représente les variations du coefficient d'absorption en fonction de la puissance optique d'entrée dans le cas de la structure de la figure 2.
- La figure 4 est un diagramme de bandes d'énergie à puissance optique nulle dans le cas de la structure de la figure 2.
- La figure 5 montre la modification du diagramme de bandes d'énergie pour une forte puissance optique.
- La figure 6 représente une structure semi-conductrice conforme à l'invention.
- La figure 7 est un diagramme de bandes d'énergie dans le cas de la structure de la figure 6 pour une forte puissance optique.
- La figure 8 est un diagramme montrant les variations du coefficient d'absorption en fonction de la puissance optique dans le cas de la structure de la figure 6.

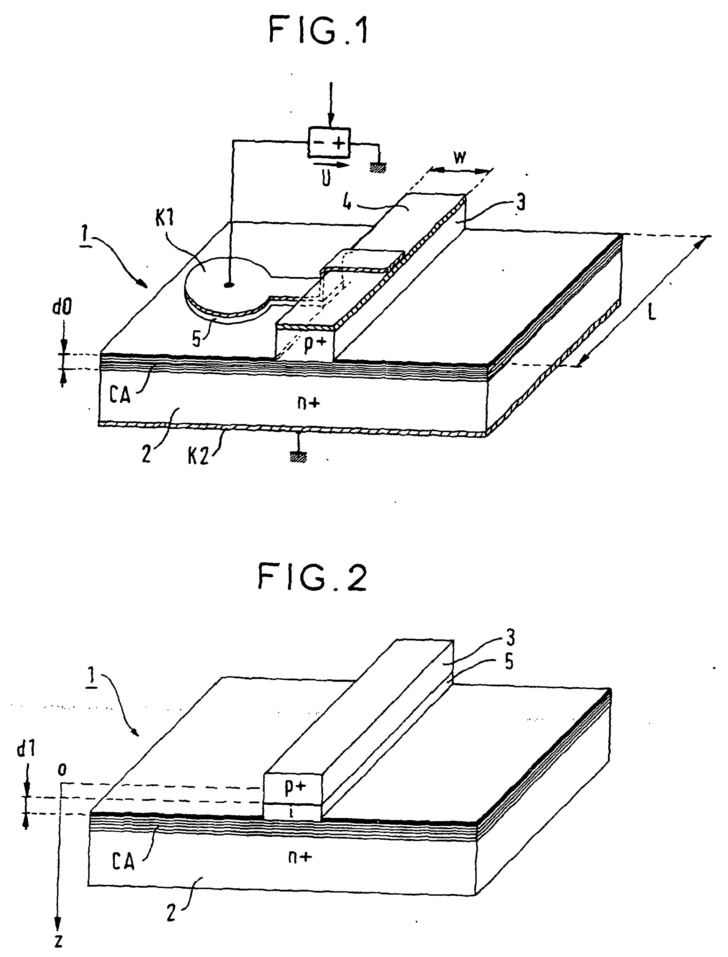

La figure 1 représente schématiquement un modulateur électro-optique semi-conducteur de structure classique. Il est réalisé sur un substrat d'éléments III-V, par exemple en phosphure d'indium. La structure semi-conductrice comprend essentiellement une première couche dopée n, généralement constituée par le substrat, une couche active CA et une seconde couche 3 dopée p.

L'exemple représenté a une structure dite "ridge" selon laquelle la seconde couche 3 a été gravée latéralement de façon à ne laisser subsister qu'un ruban de largeur w qui définit la largeur du guide optique. La couche active CA est constituée de plusieurs puits quantiques séparés entre eux par des barrières de potentiels. La première couche 2 est recouverte par une couche de métallisation pour former une électrode inférieure K2. La seconde couche 3 est recouverte par l'intermédiaire d'une couche de contact par une autre couche de métallisation 4 en contact électrique avec un plot de contact K1 placé sur le composant à côté du ridge. Le plot K1 est isolé de la couche active CA par une couche 5 de diélectrique d'épaisseur suffisante pour réduire la capacité parasite entre le plot de contact K1 et l'électrode inférieur K2.

Pour fonctionner en modulateur, le composant est polarisé en inverse par une tension U modulable autour d'une valeur moyenne. La capacité parasite due à la structure semi-conductrice proprement dite est essentiellement conditionnée par l'épaisseur des couches désertées, c'est-à-dire par l'épaisseur do de la couché active CA.

Plus précisément la capacité Co est donnée par la formule $Co = \varepsilon Lw/do$, où :

- $\varepsilon$ est la permittivité de la couche active,
- L est la longueur du composant,
- w est la largeur du guide,
- do est l'épaisseur de la couche active.

Ainsi, si l'on ne tient compte que de cette capacité, la fréquence de coupure fo du modulateur chargé par une résistance R sera :

$$fo = 1/2\pi RCo = do/(2\pi R\varepsilon Lw)$$

Si on augmente d'une valeur d1 l'épaisseur des couches désertées, on aura une nouvelle fréquence de coupure donnée par la formule :

$$f1 = fo(1+d1/do)$$

Pour obtenir ce résultat, on peut envisager de modifier la structure conformément à la figure 2. Comme représenté, une couche non dopée 5 d'épaisseur d1 est placée entre la couche active CA et la couche supérieure 3. Le choix de cette disposition peut être guidé par le fait que l'on a intérêt à écarter la couche active CA de l'électrode la plus proche, c'est-à-dire celle qui est en contact avec la couche supérieure. La composition de la couche 5 sera avantageusement choisie pour assurer la transparence à l'égard des ondes destinées à être modulées par le composant. Le choix le plus simple consiste à adopter la même composition que le substrat, ce qui assure que les propriétés optiques ne seront nullement modifiées par cette couche supplémentaire.

Une telle structure est également illustrée par la Fig.1 de KOTAKA I ET AL: 'High-speed InGaAs/InAlAs multiple-quantum-well optical modulator' dans ELECTRONICS AND COMMUNICATIONS IN JAPAN, PART 2 (ELECTRONICS), JUNE 1992, USA, vol. 75, no. 6, ISSN 8756-663X, pages 24-32, XP000316207.

Le choix de l'épaisseur d1 dépendra bien entendu du gain en bande passante que l'on cherche à obtenir. Ainsi, en choisissant d1 au moins égal à la moitié do, ce gain sera supérieur à 50 %. Par ailleurs, on peut définir une valeur limite maximale de l'épaisseur d1 en prenant en considération le fait que la valeur de la capacité ne dépend que de l'épaisseur totale des couches désertées, cette épaisseur dépendant de la tension appliquée entre les électrodes du composant.

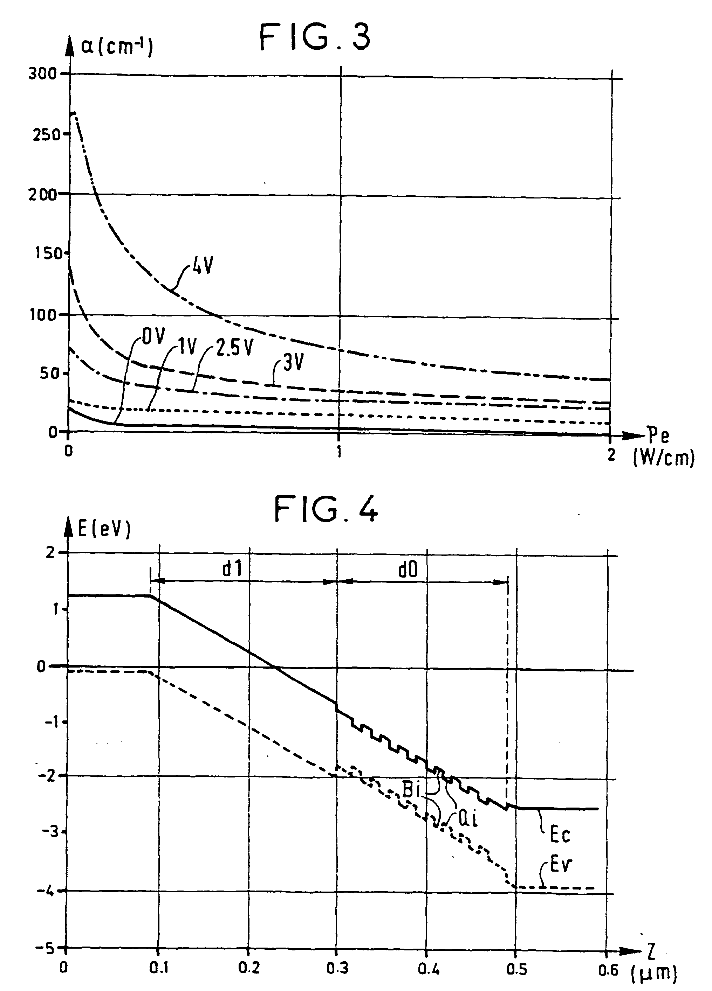

Pour étudier maintenant le phénomène de saturation de l'absorption à forte puissance, on peut considérer les variations du coefficient d'absorption en fonction de la puissance optique injectée pour différentes valeurs de tension de polarisation U. La figure 3 montre les variations du coefficient d'absorption $\alpha$ en fonction de la puissance optique d'entrée Pe dans le cas de la structure de la figure 2. Le coefficient d'absorption $\alpha$ est défini comme la diminution relative de puissance optique transmise par la couche active par unités de longueur de propagation dans cette couche. En abscisse, Pe est la puissance optique par unité de largeur du guide. La puissance Pe est ici exprimée en W/cm et l'absorption en $cm^{-1}$. La figure montre cinq courbes qui correspondent à des tensions de polarisation U égales respectivement à 0 V, 1 V, 2,5 V, 3 V, et 4 V.

Si on applique une tension U modulée par exemple entre 1 et 4 volts, on peut constater une dégradation importante du taux d'extinction lorsque la puissance optique Pe augmente.

Pour expliquer ce phénomène, il convient de considérer les diagrammes de bandes d'énergie pour la structure considérée.

La figure 4 montre un tel diagramme dans le cas où la puissance optique d'entrée est nulle. La figure représente le bas de la bande de conduction Ec et le haut de la bande de balance Ev en fonction de la position verticale z dans la structure de la figure 2. L'ordonnée E représente l'énergie des électrons exprimée en électronvolts, le niveau 0 d'énergie correspondant au niveau de Fermi de la couche supérieure 3. Les courbes correspondent au cas où U=2,5 volts.

La figure montre l'évolution des niveaux Ec et Ev à partir d'un point de référence situé dans la couche 3 (partie gauche courbe) en direction de la couche 2 (partie droite des courbes). Les niveaux Ec et Ev varient linéairement dans la couche non dopée 5 puis présentent des variations périodiques dans la structure à puits quantiques de la couche active CA. Selon l'exemple représenté, la couche active CA comporte huit puits quantiques Qi séparés entre eux par des barrières de potentiel Bi.

L'efficacité d'absorption du composant est directement liée à l'amplitude du champ électrique présent dans les puits quantiques de la couche active. Cette amplitude correspond à la pente de la courbe Ec dans ces puits. Comme on peut le constater sur la figure 4, lorsque la puissance optique d'entrée est nulle l'amplitude du champ est constante.

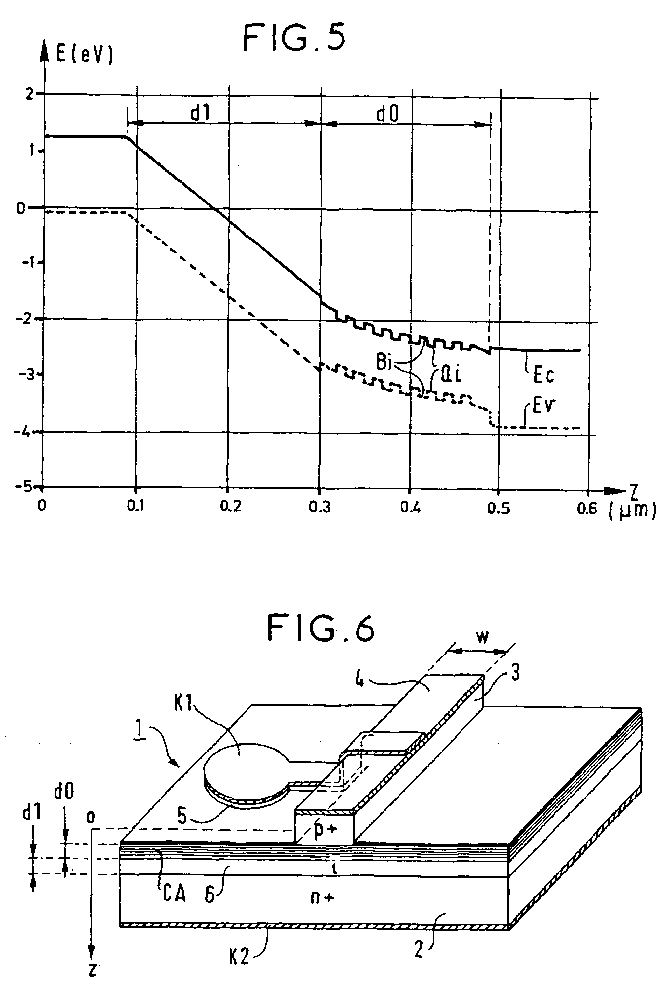

Si par contre on introduit dans la couche active du modulateur une puissance optique élevée, par exemple, de l'ordre de 2 watts par cm, les courbes Ec et Ev subissent une déformation telle que représentée à la figure 5. On constate alors que l'amplitude moyenne du champ électrique dans les puits quantiques est plus faible, ce qui explique le phénomène de saturation de l'absorption.

La figure 6 représente une autre structure semi-conductrice où on a placé une couche non dopée 6 entre la couche active CA et la première couche 2.

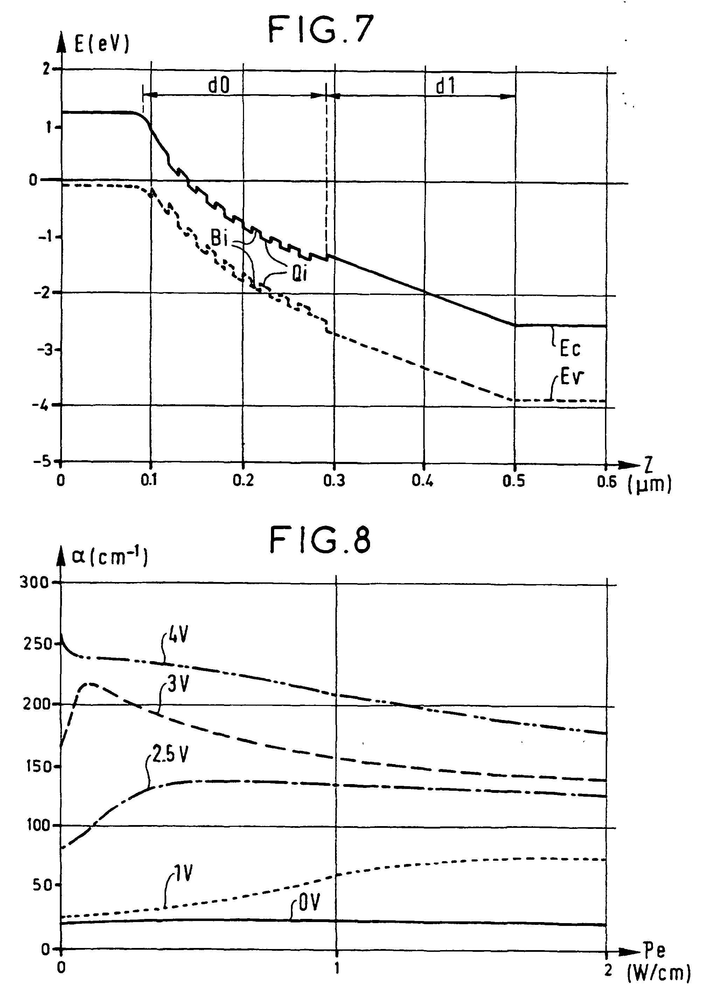

La figure 7 représente le diagramme de bande d'énergie pour la structure de la figure 6. Ce diagramme correspond à la même puissance optique appliquée que dans le cas de la figure 5. On constate alors que les courbes Ec et Ev présentent une déformation qui implique une augmentation de l'amplitude du champ électrique dans les puits quantiques, ce qui devrait favoriser l'efficacité de l'absorption.

L'amélioration escomptée peut être vérifiée en traçant les valeurs du coefficient d'absorption $\alpha$ en fonction de la puissance optique d'entrée Pe pour cette dernière structure. Les courbes correspondantes sont représentées à la figure 8. En comparant les courbes de la figure 8 aux courbes correspondantes de la figure 3, on peut vérifier une amélioration du taux d'extinction, par exemple pour une modulation de la tension U entre 1 et 4 volts. L'amélioration est d'autant plus notable que la puissance optique Pe est élevée.

Les courbes représentant les variations de l'indice n de la couche active en fonction de la puissance optique pour les deux structures considérées sont analogues aux courbes des figures 3 et 8. Par conséquent, la structure selon l'invention produit également une amélioration du fonctionnement en modulateur de phase.

A titre d'illustration, nous allons donner les caractéristiques d'une réalisation particulière qui correspond aux courbes qui viennent d'être présentées :

- Substrat 2 : InP dopé Si ($10^{18}$ électrons/$cm^3$)
- Couche 3 : InP dopé Be ($10^{18}$ trous/$cm^3$)
- Couche 6 : InP non dopé (dopage résiduel $=2.10^{15}$ électrons/$cm^3$).
- Couche active CA : 8 puits quantiques, 9 barrières de potentiel.
- Puits : $Ga_{0,21}In_{0,79}As_{0,74}P_{0,26}$ ; épaisseur: 9 nm
- Barrières : $Ga_{0,21}In_{0,79}As_{0,45}P_{0,55}$ ; épaisseur : 11 nm
- Epaisseur do de la couche active : 0,17 $\mu m$
- Epaisseur d1 de la couche 6 : 0.20 $\mu m$
- Epaisseur de la couche 3 : 2.5 $\mu m$
- Epaisseur du substrat : 100 $\mu m$
- Longueur du composant L : 100 à 200 $\mu m$
- Largeur du guide w : 3 $\mu m$
- Tension de commande U modulée entre 1 et 4 volts
- Longueur d'onde de fonctionnement : 1,55 $\mu m$

L'invention n'est toutefois pas limitée à ce cas particulier de réalisation. De nombreuses variantes peuvent au contraire être envisagées par l'homme du métier. En particulier l'invention peut utiliser d'autres substrats III-V tels que GaAs. De même, le nombre de puits quantiques formant la couche active peut être quelconque. Par ailleurs, la couche active peut éventuellement comporter une ou plusieurs couches de confinement optique délimitant les puits quantiques.

## Revendications

1. Modulateur électro-optique comportant deux électrodes (K1, K2) disposées de part et d'autre d'une structure semi-conductrice, ladite structure étant réalisée sur un substrat d'éléments III-V et comportant :

   - une première couche (2) composée desdits éléments III-V et dopée pour présenter une conductibilité de type n,
   - une seconde couche (3) composée desdits éléments III-V et dopée pour présenter une conductibilité de type p,
   - une couche active (CA) disposée entre lesdites première et seconde couches (2, 3) et composée d'une succession de puits quantiques (Qi) et de barrières de potentiels (Bi),

   **caractérisé en ce que** pour diminuer la capacité électrique présente entre lesdites électrodes (K1, K2), une troisième couche (6) composée d'éléments III-V non dopés est disposée entre ladite couche active (CA) et ladite première couche (2).

2. Modulateur selon la revendication 1, **caractérisé en ce que** ladite troisième couche (6) a une composition qui lui assure la transparence pour les longueurs d'onde des ondes destinées à être modulées par le modulateur.

3. Modulateur selon la revendication 2, **caractérisé en ce que** ladite troisième couche (6) est composée des mêmes éléments que le substrat.

4. Modulateur selon l'une des revendications 1 à 3, **caractérisé en ce que** ladite troisième couche (6) est en contact direct avec la couche active (CA) et ladite première couche (2).

5. Modulateur selon l'une des revendications 1 à 4, **caractérisé en ce que** l'épaisseur (d1) de la troisième couche (6) est au plus égal à une valeur limite d'épaisseur telle que les couches non dopées de la structure soient désertées lorsqu'est appliquée entre les électrodes (K1,K2) une tension minimum de fonctionnement du modulateur.

6. Modulateur selon l'une des revendications 1 à 5, **caractérisé en ce que** l'épaisseur (d1) de la troisième couche (6) est au moins égale à la moitié de l'épaisseur (d0) de la couche active (CA).

7. Modulateur selon l'une des revendications 1 à 6, **caractérisé en ce que** ledit substrat est composé de phosphure d'indium.

8. Dispositif laser à modulateur intégré, **caractérisé en ce qu'**il comporte une partie modulateur conforme à l'une des revendications 1 à 7.

9. Utilisation du modulateur selon l'une des revendications 1 à 7 comme modulateur de puissance d'une onde porteuse optique.

10. Utilisation du modulateur selon l'une des revendications 1 à 7 comme modulateur de phase d'une onde porteuse optique.

## Patentansprüche

1. Elektrooptischer Modulator, aufweisend zwei Elektroden (K1, K2), die auf beiden Seiten einer Halbleiterstruktur angeordnet sind, die auf einem Substrat von Elementen III-V realisiert ist und aufweist:

   - eine erste Schicht (2), die aus den Elementen III-V zusammengesetzt und dotiert ist, um eine Leitfähigkeit des Typs n aufzuweisen,
   - eine zweite Schicht (3), die aus den Elementen III-V zusammengesetzt und dotiert ist, um eine Leitfähigkeit des Typs p aufzuweisen;
   - eine aktive Schicht (CA), die zwischen der ersten und der zweiten Schicht (2, 3) angeordnet ist und sich aus einer Abfolge von Quantentöpfen (Qi) und Potentialbarrieren (Bi) zusammensetzt,

   **dadurch gekennzeichnet, daß** um die elektrische Kapazität zwischen den Elektroden (K1, K2) zu verringern, eine dritte Schicht (6) aus nicht dotierten Elementen III-V zwischen der aktiven Schicht (CA) und der ersten Schicht (2) angeordnet ist.

2. Modulator nach Anspruch 1, **dadurch gekennzeichnet, daß** die dritte Schicht (6) eine Zusammensetzung hat, die die Transparenz dieser Schicht (6) für die Wellenlängen der Wellen gewährleistet, die vom Modulator moduliert werden sollen.

3. Modulator nach Anspruch 2, **dadurch gekennzeichnet, daß** die dritte Schicht (6) sich aus den gleichen Elementen zusammensetzt wie das Substrat.

4. Modulator nach einem der Ansprüche 1 bis 3, **dadurch gekennzeichnet, daß** die dritte Schicht (6) in unmittelbarem Kontakt mit der aktiven Schicht (CA) und der ersten Schicht (2) ist.

5. Modulator nach einem der Ansprüche 1 bis 4, **dadurch gekennzeichnet, daß** die Dicke (d1) der dritten Schicht (6) höchstens gleich einem Dicken-Grenzwert ist, derart daß die nicht dotierten Schichten der Struktur verarmt sind, wenn zwischen den Elektroden (K1, K2) eine minimale Arbeitsspannung des Modulators angelegt wird.

6. Modulator nach einem der Ansprüche 1 bis 5, **dadurch gekennzeichnet, daß** die Dicke (d1) der dritten Schicht (6) mindestens gleich der Hälfte der Dicke (d0) der aktiven Schicht (CA) ist.

7. Modulator nach einem der Ansprüche 1 bis 6, **dadurch gekennzeichnet, daß** das Substrat aus Indiumphosphid besteht.

8. Laservorrichtung mit integriertem Modulator, **dadurch gekennzeichnet, daß** sie einen Modulatorteil gemäß einem der Ansprüche 1 bis 7 aufweist.

9. Verwendung des Modulators gemäß einem der Ansprüche 1 bis 7 als Leistungsmodulator einer optischen Trägervvelle.

10. Verwendung des Modulators gemäß einem der Ansprüche 1 bis 7 als Phasenmodulator einer optischen Trägerwelle.

**Claims**

1. An electro-optical modulator comprising two electrodes (K1, K2) disposed on respective sides of a semiconductor structure, said structure being formed on a substrate of III - V elements and comprising:

   - a first layer (2) composed of said III - V elements and doped to afford an n-type conductivity,
   - a second layer (3) composed of said III - V elements and doped to afford a p-type conductivity, and
   - an active layer (CA) disposed between said first and second layers (2, 3) and composed of a succession of quantum wells (Qi) and potential barriers (Bi),

   **characterised in that** to reduce the electrical capacitance between said electrodes (K1, K2), a third layer (6) composed of undoped III - V elements is disposed between said active layer (CA) and said first layer (2).

2. A modulator according to claim 1 **characterised in that** said third layer (6) is of a composition which affords it transparency in relation to the wavelengths of the waves intended to be modulated by the modulator.

3. A modulator according to claim 2 **characterised in that** said third layer (6) is composed of the same elements as the substrate.

4. A modulator according to one of claims 1 to 3 **characterised in that** said third layer (6) is in direct contact with the active layer (CA) and said first layer (2).

5. A modulator according to one of claims 1 to 4 **characterised in that** the thickness (d1) of the third layer (6) is at most equal to a limit thickness value such that the undoped layers of the structure are depleted when a minimum operating voltage of the modulator is applied between the electrodes (K1, K2).

6. A modulator according to one of claims 1 to 5 **characterised in that** the thickness (d1) of the third layer (6) is at least equal to half the thickness (d0) of the active layer (CA).

7. A modulator according to one of claims 1 to 6 **characterised in that** said substrate is composed of indium phosphide.

8. An integrated modulator laser device **characterised in that** it comprises a modulator portion according to one of claims 1 to 7.

9. Use of the modulator according to one of claims 1 to 7 as a power modulator for an optical carrier wave.

10. Use of the modulator according to one of claims 1 to 7 as a phase modulator for an optical carrier wave.

## FIG.1

## FIG.2

# FIG. 3

# FIG. 4

# FIG.5

# FIG.6

# FIG.7

# FIG.8